# EUROPEAN PATENT APPLICATION

(11) **EP 0 684 567 A1**
(43) Date of publication of application: **29.11.1995**
(21) Application number: 95107283.4
(22) Date of filing: 13.05.1995
(51) Int. Cl.: G06F 17/30

(54) **Dual operation modes for palindrome and lossy/lossless display of medical images**

(30) Priority: 27.05.1994 US 250420
(71) Applicant: EASTMAN KODAK COMPANY, Rochester, New York 14650 (US)
(72) Inventor: Pelanek, Geraldine Ann, c/o Eastman Kodak Co., Rochester, New York 14650-2201 (US); Condit, Paul Brainard, c/o Eastman Kodak Co., Rochester, New York 14650-2201 (US); Dhurjaty, Sreeram, c/o Eastman Kodak Co., Rochester, New York 14650-2201 (US); Jones, Paul William, c/o Eastman Kodak Co., Rochester, New York 14650-2201 (US)
(74) Representative: Schmidt, Peter, Dipl.-Ing.

(57) **Abstract**

A medical image storage system including a recordable compact optical disk (10) (generally referred to as CD-R) having recorded thereon a plurality of losslessly compressed and corresponding lossy compressed medical images. The system includes a display station (34) having dual operation modes for palindrome and lossy/lossless image display of the medical images recorded on the CD-R.

## Description

This invention relates in general to a medical image storage system including a recordable compact optical disk (generally referred to as CD-R) having recorded thereon a plurality of losslessly compressed and corresponding lossy compressed medical images. This invention relates in particular to a display station having dual operation modes for palindrome and lossy/lossless image display of the medical images recorded on the CD-R.

In traditional film screen radiography, an x-ray image of an object, such as an anatomical part of a patient, is formed in film. The film is then processed to produce a developed x-ray film image. Storage of and/or display of multiple x-ray film images from a patient study is space intensive, inconvenient and expensive. With the advent of digital image diagnostic scanner equipment, such as CT and MRI scanners, digital radiographic images have become commonplace. Digital images have several advantages over film images. They can be stored in compact magnetic or optical media. They can be displayed on a display device, such as a video monitor. They can also be processed to optimize various characteristics of the digital radiographic image.

Digital radiographic images can also be produced by means of computed radiography techniques. The following U.S. patents disclose the storage in an optical disk media of digital images produced by computed radiography: US-A-4,768,099; US-A-5,001,569; US-A-5,019,975. It is disclosed in these patents that the image signals recorded on the optical disk are subjected to an image compression technique before recording. There is no disclosure in these patents, however, of recording both lossy and lossless radiographic images on the same optical disk. US-A-5,015,854, discloses a radiation image display apparatus having a magnetic hard drive which stores both uncompressed image signals and a condensed image signal which represents an outline of the uncompressed radiation image. There is no disclosure in this patent, however, of storing the uncompressed and compressed radiation image signals on a recordable optical compact disk.

Cardiac x-ray angiography with the aid of x-ray absorbing contrast media, images the arteries which supply blood to the heart muscle tissue. Restrictions in blood flow (stenoses) cause insufficient blood supply and hence oxygen deprivation of the muscle tissue. The partial lack of oxygen will cause chest pain (angina), while a nearly total lack of blood flow will cause a heart attack (myocardial infarction) during which the muscle tissue dies and the performance of the heart either diminishes or ceases to function and the individual dies. Since the arteries of interest wrap around the outside of the heart, and the heart is constantly in motion, to adequately image these vessels the x-ray exposure and image capture must be obtained from numerous anatomical projections and be captured with real time motion imaging (approximately 30/images per second) at high spatial resolutions. All of this leads to large amounts of digital data. An average diagnostic procedure is 2000 images. Depending upon the image acquisition matrix, the average procedure generates between 500 Megabytes (MB) and 2 Gigabytes (GB) of digital data. Imaging during an interventional procedure can cause the amount of digital data to double.

The most common method today to record cardiac catheterization images are in analog form on specialized 35 mm black and white cine film. However, there is a strong desire to archive the digitally generated images on a cost effective medium as the official record of the procedure and for future review as well. To use digital storage media more efficiently, the data can be mathematically compressed in a way that is totally reversible (lossless compression). To subsequently view the images, the clinician needs to see the images in real time motion and at slower speeds as well. The clinician also wants to randomly access rather than just sequentially access the images. Presently, there is no digital archive medium which can meet the following requirements: data transfer rates fast enough to provide real time motion display of losslessly compressed images and random data access. Therefore, the only available options to provide random access and real time motion display are, either to transfer the data from a slower inexpensive archive medium onto a faster more expensive buffer medium, or to have stored the data at a higher lossy compression so that the data transfer rate of the inexpensive archive medium is fast enough to support real time motion display.

Clinicians have expressed a strong preference to avoid the required delay time while the digital data is transferred from the archive medium to the fast buffer medium. Eigen (Nevada City, CA) introduced a product which stores the digital cardiac image data on a magneto-optical disk in two forms. One form is a lossless compression, the other is a lossy compression which supports higher speed motion display. The Eigen review product allows the clinician to review images in motion utilizing the lossy compressed data and if the user stops for a still image the lossless compression data corresponding to the still image will be utilized.

Using a magneto-optical disk to archive the images as a replacement for cine film has two distinct disadvantages, however. Firstly, cine film is an unalterable record of the procedure, whereas a magneto-optical disk is a re-writable medium permitting intentional or accidental changes to the permanent record of the procedure. Secondly, magneto-optical media violates the desire for a cost effective replacement for cine film. To archive an average procedure on a magneto-optical disk will cost about three times more than archiving the images on cine film.

US-A-5,191,548 and US-A-5,146,555 disclose display of compressed images on a display that do not adequately address the problem of palindrome viewing.

According to the present invention, there is provided a solution to the problems of the prior art. According to an aspect of the present invention, medical image data is archived on a recordable optical compact disk. The medical image data is stored on the compact disk in two forms: losslessly compressed image data and corresponding lossy compressed image data. Apparatus for displaying medical images has dual operation modes for palindrome and lossy/lossless image display of the medical images recorded on a recordable optical compact disk.

According to another feature of the present invention, there is provided apparatus for displaying medical images comprising:
a reader for reading medical image data from a transportable medium upon which is recorded a plurality of substantially losslessly compressed digital medical images and a plurality of lossy compressed digital medical images corresponding to said losslessly compressed digital medical images;
a memory;
a decompression circuit for decompressing lossy compressed and losslessly compressed digital medical images;
a display; and
a controller, including a user interface,

for controlling said apparatus, (a) in a first display mode selected by said user interface, in which said reader reads lossy compressed digital medical images from said transportable medium, said read images are stored in said memory, stored images are read out of said memory for display on said display after decompression by said decompression circuit, in either a forward direction or in a reverse direction, at speeds from 0 to a predetermined number of frames per second; or (b) in a second display mode selected by said user interface, in which, at speeds in a forward direction from 0 to a threshold number of frames per second, said reader reads losslessly compressed digital medical images from said transportable medium, said read images are stored in said memory, stored images are read out of said memory for display on said display after decompression by said decompression circuit, and in which, at speeds from said threshold to said predetermined number of frames per second, said reader reads lossy compressed digital medical images from said transportable medium, said read images are stored in said memory, stored images are out of said memory for display on said display after decompression by said decompression circuit.

The present invention has the following advantages:
a) A clinician is allowed to perform a diagnosis upon motion images which have lost no data from their original acquisition.
b) By loading the medical image data from the archive medium to memory before display, there is provided a constant image review speed display which compensates for the variable amount of compressed data per image.
c) A display review mode is provided which most closely approximates the performance of the clinician's current review station for motion cardiology images, a cine projector, including palindrome viewing.
d) By using lossy and lossless compressed medical image data and a random access archive medium, the user can view real time motion images without significant delay, and on an inexpensive review station.

Fig. 1 is a block diagram of a medical image archiving and review system;
Fig. 2 is a diagrammatic view of an embodiment of record once compact disk;
Fig. 3 is a block diagram of an archiving station of the system of Fig. 1; and
Fig. 4 is a block diagram of a review station of the system of Fig. 1.

According to the present invention, there is provided a technique for recording medical images, and, more particularly, x-ray cardiology angiography images on a recordable optical compact disk. The recorded image data is compressed in two different ways: one is a lossy or irreversible compression and the other is a lossless or reversible compression. The lossy compression results in lost data. However, it should appear on a video display as nearly visually lossless. The lossless compressed digital data is compressed much less than the lossy compression and allows restoration of the image to its full original acquisitioned resolution. Lossless compression ratios are generally in the range of 1.5:1 to 4.0:1, whereas lossy compression ratios can be much higher, for example, 6:1 and up.

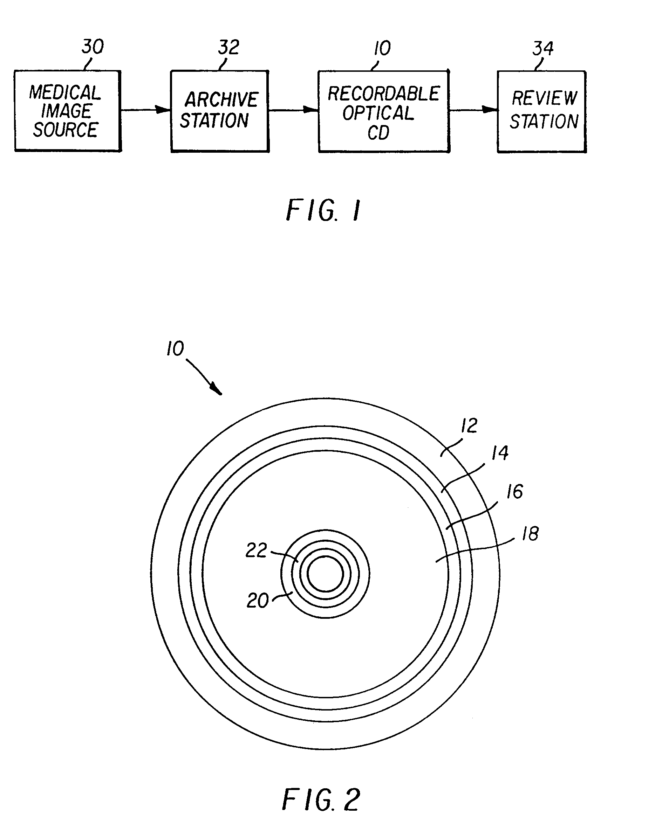

As shown in Fig. 2, the recordable optical compact disk 10 is formatted to have the following regions: a handling zone 12 (which is empty); a leadout region 14; a region 16 for storing the file directory; a region 18 where losslessly compressed digital image data is stored; a region 20 where the lossy compressed digital image data is stored; and a region 22 where header information is stored. Preferably, the header information contains the appropriate information to comply with ISO 9660 formats. The ISO 9660 compliance will enable multiple computer platforms (IBM compatible PC's, Macintosh, Sun, and so forth) to recognize files on the CD.

The recordable optical compact disk or CD-R is a compact disk medium that can be recorded on once, but which, once recorded on, is not erasable. The compact disk may be recorded on in unrecorded regions at different times. The medium is compact, transportable, cost effective, and reliable.

The recordable optical compact disk 10 of Fig. 2 can be used in a digital archiving and review system alternative to 35mm cine film and associated equipment (cine cameras, processors and projectors). Although a cardiology imaging system will be described hereinafter, it will be understood that other medical imaging archiving and review system applications are contemplated for use with the recordable optical compact disk of the present invention. As shown in Fig. 1, a cardiology motion image source 30 provides digital images to an archive station 32 where the images are recorded on one or more recordable optical compact disks 10. The recordable optical CD 10 can then be viewed on a review station 34.

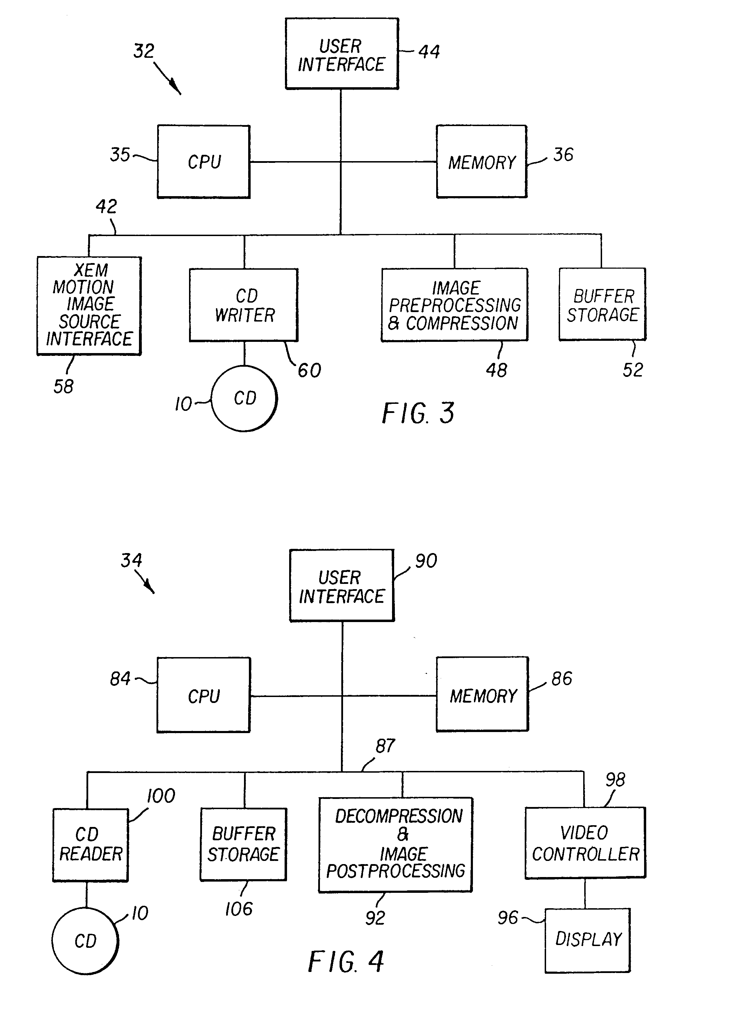

Referring now to Fig. 3, there is shown a block diagram of an archive station 32 for receiving cardiology images and recording them on a recordable optical compact disk 10. As shown, archive station 32 includes, a central processing unit (CPU) 35, internal memory 36, and a user input device linked to a bus 42. Bus 42 is linked to image pre-processing and compression board 48, and a buffer storage 52. Connected to bus 42 is an XEM (X-ray equipment manufacturer) motion image source interface 58, and a CD writer 60. CD writer 60 is a recordable optical disk writer, such as supplied by the Eastman Kodak Company, Rochester, New York, as the Kodak PCD Writer 600. The compression board is preferably based on the Joint Photographic Experts Group (JPEG) international digital image compression standard for continuous tone still images. A general overview of this standard is presented in the article entitled "The JPEG Still Picture Compression Standard", by Gregory K. Wallace, Communication of the ACM, April 1991, volume 4, No. 4, pages 30-44. It will be understood that other compression techniques can also be used within the scope of the present invention.

The operation of archive station 32 is as follows:
In general, during the cardiac catheterization case study, the images are stored in the x-ray equipment manufacturer's (XEM's) digital acquisition memory. The entire case's data will be transferred to the archive station 32. Once data is stored in station 32, the XEM memory is free to acquire a new patient's images. The image data is received from the XEM memory by interface board 58. The image data is compressed two different ways in compression board 48: there is a lossy compression and a lossless (for example, 2:1) compression. The lossy compression results in lost data. However, it should appear as nearly visually lossless upon display. The 2:1 compression is lossless and allows restoration of the image to its full original acquisition resolution. The lossless and lossy compressed image data is stored in buffer storage 52. The user enters the patient's name, ID number, and so forth, into the archive station 32 by user input device 44, if this information cannot be supplied via the XEM motion image source interface 58. This information is merged with the image data and written by CD writer 60 to the CD 10. This feature allows the elimination of preparing the lead letters and the identification x-ray exposure. Part of this information will be included in the header information written to the CD 10 as well as the file directory of the CD 10 contents.

A typical cardiology motion image source produces 30 digital images per second. Each digital image can have a format of 512 x 512 pixel array, or a 1024 x 512 pixel array, with a pixel depth of 8 bits. If a typical patient case study includes 2000 images, a single Recordable CD can be used to record the case study (assuming lossy compression of 10+:1 and lossless compression of 2:1).

Because of the probable need to accept new data from the user's lab while the previous patient's data has not been completely archived, buffer storage 52 has the capacity to hold a minimum of two long patient study cases.

Currently available 63 minute record once CDs 10 have a maximum capacity of 580 Megabytes. The total capacity is not just data, but must include the data plus the ISO 9660 file structures, and so forth. Greater capacity record once CDs should be physically interchangeable with current record once CDs.

If the cath case exceeds the capacity of a single CD 10, the lossy compressed track will contain the images of the entire case and is identical on each CD 10. The lossless data is appropriately split between the multiple CDs 10.

### Review Station

A review station 34 for displaying the images of a medical image study recorded on a recordable CD 10 is shown in Fig. 4. As shown, review station 34 includes a user interface 90, a central processing unit (CPU) 84, and memory 86 connected to bus 87. Also connected to bus 87 is an image decompression and post-processing board 92, and video display 96 by way of video controller 98. Review station 34 includes, a CD reader 100, and buffer storage 106 connected to bus 87.

In general, review station 34 operates as follows: A CD 10 is loaded into CD reader 100. Reader 100 produces sequential images of the medical image study. The images are stored in buffer storage 106. Images which are read out of buffer storage 106 are decompressed and processed by board 92. The images are displayed on display 96 by way of video controller 98.

Once the medical image case is stored onto CD 10 by archive station 32, it is available for immediate review on review station 34 (Fig. 4). The user selects through user interface 90 the desired CD 10 for viewing and the desired review mode. The reader 100 reads the CDs 10 data compression format to determine the appropriate image decompression factors. The file directory is read from the CD 10 into memory 86 and the review station 34 is ready to begin displaying images on display 96.

The need for palindrome capability (viewing motion both forward and reverse) has led to two operational modes for review station 34; one of which can offer full palindrome viewing if the system is restricted to utilizing the lossy data. Furthermore, the user only has to load one of the potentially multiple CDs 10 used to archive the case, since each CD contains identical lossy compression data of the entire case. The other mode will not provide reverse viewing, but will allow the user to back up and repeat viewing forward motion while maintaining the ability to access the lossless data for slow speed or still viewing. This mode of operation will require the user to load all CDs 10 involved in archiving the case.

Although the higher compression image data has lost data from the original image data, its compression will produce nearly visually lossless images. Cardiologists have consistently expressed a reluctance to wait for digital image records to be transferred and loaded into memory for real-time viewing. This concern is obviated by having the lossy compressed images available for real-time viewing (and also slow/still speeds depending upon the mode of operation) while the lossless images are available for detailed study of the images at slow or still speeds. The user can switch rapidly between any of the speeds: real-time, slow or still images.

### Review Station Modes of Operation

### MODE A

If the user selects Mode A, only the lossy data will be utilized for any speed between still and real time motion. As the lossy compressed data is read from the CD 10 it is loaded into the buffer storage 106 which will act as a buffer to compensate for the variable amount of compressed data on a frame to frame basis. After a suitable amount of data has been buffered that will allow sustained display rates, the data is sent to the decompression board 92 for image display on display 96. When the user switches to reverse viewing, the compressed data will be read in "reverse" from buffer storage 106 and sent to the decompression board 92 for processing. Via either data direction path, the decompressed data is then processed for display 96.

### MODE B

If the user selects Mode B, both the lossy and lossless data will be utilized for image display on display 96. Obviously, if the patient case was archived with multiple CDs 10, potentially the user must load all the cases CDs 10. The lossy data will be used for viewing images in forward motion at speeds > the threshold speed through realtime motion. For images viewed still, single advance or less than the threshold speed, the lossless data will be obtained from the CD 10 for decompression by decompression board 92. The threshold speed is a function of the data transfer rate of the CD reader 100 used and the amount of data per image. The amount of data per image is primarily a function of the data acquisition/archive matrix.

Since the user can interactively switch between the lossy and lossless data, the scheme of loading the compressed data into buffer storage 106 and reading it in reverse will not work as the reverse viewing of the lossy/lossless data image mixture would not permit sustained viewing speeds and this would be very annoying to the user. Therefore, true palindrome viewing cannot be provided when operating in this mode. To repeat viewing a sequence of images, the user may "jump back" a specific number of images and once again view images in forward motion. Depending upon frames to be viewed and the speed selected for reverse viewing of images, the user may experience a time delay as the appropriate data (lossy or lossless) may have to be first read off the CD 10. In Mode B, motion is limited to the forward direction only.

Although the invention has been described specifically in relation to the archive and review of cardiology images produced during a catheterization study of a patient by angiography x-ray imaging, it will be understood that the present invention includes the recording of other types of medical images in both lossy compressed and losslessly compressed image data on a record once optical compact disk. Thus, the medical images can be received from any number of diagnostic imaging modalities (such as, MRI, US, CT, PET, NM, and so forth); digital radiography (such as storage phosphor systems); still and cine radiographic film digitizers; and the like. It will also be understood that image compression techniques other than JPEG can be used to produce the lossy and lossless compressed image data recorded on the record once optical compact disk of the present invention.

## Claims

1. Apparatus for displaying medical images comprising:
a reader (100) for reading medical image data from a transportable medium (10) upon which is recorded a plurality of substantially losslessly compressed digital medical images and a plurality of lossy compressed digital medical images corresponding to the losslessly compressed digital medical images;
a memory (106);
a decompression circuit (92) for decompressing lossy compressed and losslessly compressed digital medical images;
a display (96); and
a controller (84), including a user interface (90),
for controlling the apparatus, (a) in a first display mode selected by the user interface (90), in which the reader (100) reads lossy compressed digital medical images from the transportable medium (10), the read images are stored in the memory (106), stored images are read out of the memory (106) for display on the display (96) after decompression by the decompression circuit, in either a forward direction or in a reverse direction, at speeds from 0 to a predetermined number of frames per second; or (b) in a second display mode selected by the user interface (90), in which, at speeds from 0 to a threshold number of frames per second, the reader (100) reads losslessly compressed digital medical images from the transportable medium (10), the read images are stored in the memory (106), stored images are read out of the memory (106) for display on the display (96) after decompression by the decompression circuit (92), and in which, at speeds from the threshold to the predetermined number of frames per second, the reader (100) reads lossy compressed digital medical images from the transportable medium (10), the read images are stored in the memory (106), stored images are read out of the memory (106) for display on the display (96) after decompression by the decompression circuit (92).

2. The apparatus of claim 1 wherein the reader (100) is an optical compact disk reader, and wherein the transportable medium (10) is a recordable optical compact disk upon which is recorded the losslessly compressed and the lossy compressed medical images.

3. The apparatus of claim 1 wherein the losslessly compressed and lossy compressed images recorded on the transportable medium (10) conform to the compression standards of the JPEG (Joint Photographic Experts Group) Still Picture Compression Standard, and wherein the decompression circuit conforms to the JPEG standard.

4. The apparatus of claim 1 wherein the predetermined number of frames per second represents real time motion of medical images displayed on the display (96).

5. The apparatus of claim 1 wherein the memory (106) includes a buffer to compensate for variable data rate per image to attain a constant display rate.
